# EUROPÄISCHE PATENTANMELDUNG

(11) **EP 2 184 189 A1**
(43) Veröffentlichungstag der Anmeldung: **12.05.2010**
(21) Anmeldenummer: 08019494.7
(22) Anmeldetag: 07.11.2008
(51) Int. Cl.: B60C 25/00, B60C 17/04, B60C 25/138

(54) **Verfahren zur Montage eines Reifen-Notlaufsystems und Montagetisch**

(71) Anmelder: Europlast-Nycast GmbH, 40882 Ratingen-Homberg (DE)
(72) Erfinder: Seelig, Hans-G., 45149 Essen (DE); Orth, Michael, 45481 Mühlheim a. d. Ruhr (DE); Krassen, Hans-Joachim, 40699 Erkrath (DE)
(74) Vertreter: DR. STARK & PARTNER

(57) **Zusammenfassung**

Die Erfindung betrifft ein Verfahren zur Montage eines Reifen-Notlaufsystems mit einem verspannbaren Notlaufeinsatz für ein Felge und Luftbereifung (3) umfassendes Kraftfahrzeugrad, wobei der Notlaufeinsatz wenigstens zwei Teilelemente (4) und einen auf der Innenseite der Felge anbringbaren Statorring (5) umfasst, auf dem die Teilelemente (4) als Rotor montierbar sind. Für eine vereinfachte Montagemöglichkeit eines solchen Reifen-Notlaufsystems sollen die Reifenwandungen der Luftbereifung (3) auseinander gezogen werden, so dass sich zwischen ihnen ein Freiraum bildet, dann die Rotorsegmente in den Freiraum der Luftbereifung eingebracht und miteinander verbunden werden, anschließend der zusammengedrückte Statorring (5) in das Innere des Rotors (6) gebracht und in den von dem Rotor (6) umschlossenen Innenraum gedrückt wird, dann der Statorring (5) auseinandergedrückt wird und die Luftbereifung (3) mit dem darin montierten Notlaufeinsatz auf die Felge aufgeschoben wird.

## Beschreibung

Die Erfindung betrifft ein Verfahren zur Montage eines Reifen-Notlaufsystems mit einem verspannbaren Notlaufeinsatz für ein aus Felge und darauf angeordneter Luftbereifung bestehendes Kraftfahrzeugrad, wobei der Notlaufeinsatz zum einen wenigstens zwei kreisringsegmentförmige, gelenkig miteinander verbundene und/oder über ein Spannsystem miteinander verspannbare Teilelemente umfasst und zum anderen auch einen auf der der Luftbereifung zugewandten Innenseite der Felge anbringbaren, insbesondere längs und/oder quer zur Umfangsrichtung geschlitzt ausgebildeten, Statorring beinhaltet, auf dem die Teilelemente als Rotor montierbar sind, und wobei der Statorring einen in etwa mittig umlaufenden, sich in Richtung des Rotors erstreckenden Wulst aufweist, der mit einer entsprechenden Gegenausnehmung des Rotors zusammen als Führung für den Rotor ausgebildet ist. Unter Innenseite der Felge wird diejenige, auf die Felge bezogen nach außen weisende Fläche verstanden, welche sich bei montierter Luftbereifung im Inneren der Luftbereifung befindet.

Aus der Praxis sind derartige Reifen-Notlaufsysteme bekannt, die in der Regel manuell montiert werden, was aufwändig ist und hohe Anstrengungen erfordert.

Aufgabe der Erfindung ist es, die vorgenannten Nachteile zu vermeiden und eine vereinfachte Möglichkeit zur Montage eines eingangs genannten Reifen-Notlaufsystems anzugeben.

Diese Aufgabe wird dadurch gelöst, dass die Reifenwandungen der Luftbereifung auseinander gezogen werden, so dass sich zwischen ihnen ein Freiraum bildet, dann die Rotorsegmente in den Freiraum der Luftbereifung eingebracht und miteinander verbunden werden, anschließend der zusammengedrückte Statorring in das Innere des Rotors gebracht und in den von dem Rotor umschlossenen Innenraum gedrückt wird, dann der Statorring auseinandergedrückt wird und die Luftbereifung mit dem darin montierten Notlaufeinsatz auf die Felge aufgeschoben wird. Hierdurch kann eine vereinfachte Montage erfolgen.

Dabei kann der Statorring zumindest einen in etwa mittig umlaufenden, sich in Richtung des Rotors erstreckenden Wulst aufweisen und der Rotor mit wenigstens einer entsprechenden Gegenausnehmung versehen sein und kann der Statorring derart in den Rotor eingesetzt werden, dass der Wulst des Statorrings als Führung für den Rotor fungiert.

Vorzugsweise kann die Luftbereifung auf einem Montagetisch angeordnet werden, so dass eine vereinfachte Handhabung möglich ist.

Auch können die Enden der Teilelemente des Rotors oder andere Teilbereiche der Teilelemente des Rotors, insbesondere in überlappender Weise, auf Auflageflächen des Montagetisches angeordnet und anschließend miteinander verbunden werden.

Vorzugsweise kann der Statorring beim Einbringen in das Innere des Rotors mit einem Hilfselement einen gegenüber dem Innendurchmesser des Rotors geringeren Außendurchmesser aufweisen, so dass ein vereinfachtes Einbringen des Statorrings in das Innere des Rotors ermöglicht wird.

Erfindungsgemäß kann der geringere Außendurchmesser des Statorrings mittels Zusammendrücken des Statorrings und Festlegung der zusammengedrückten Position mittels eines Hilfselements, insbesondere mittels eines Kabelbinders oder dergleichen, bewirkt werden. Zur Montage wird das Hilfselement dann entfernt oder gelöst.

Vorteilhafterweise kann der geringere Außendurchmesser des Statorrings durch eine zumindest leicht zusammengedrückte Vorfertigung des Statorrings bewirkt werden und der Statorring anschließend durch Auseinanderdrücken aufgeweitet werden, so dass anschließend ein selbsttätiges Zusammenziehen resultiert. Die zusammengedrückte Vorfertigung kann auch eine "zu kleine" unterdimensionierte Vorfertigung umfassen.

Dabei kann das Auseinanderdrücken des Statorrings unter Zuhilfenahme einer insbesondere als verschiebbares Spreizwerkzeug ausgebildeten Drückvorrichtung erfolgen, so dass ein vereinfachtes Auseinanderdrücken des Statorrings möglich ist.

Auch kann die Drückvorrichtung in den Wulst des Statorrings eingesetzt werden und insbesondere auch als Handhabungshilfe zum Aufschieben der Luftbereifung mit dem darin montierten Notlaufeinsatz auf die Felge dienen, so dass eine vereinfachte Anwendung der Drückvorrichtung gegeben ist.

Die Erfindung betrifft auch einen Montagetisch für ein Reifen-Notlaufsystem mit einem verspannbaren Notlaufeinsatz für ein aus Felge und darauf angeordneter Luftbereifung bestehendes Kraftfahrzeugrad, wobei der Notlaufeinsatz zum einen wenigstens zwei kreisringsegmentförmige, gelenkig miteinander verbundene oder über ein Spannsystem miteinander verspannbare Teilelemente umfasst und zum anderen auch einen auf der Innenseite der Felge anbringbaren, insbesondere längs und/oder quer zur Umfangsrichtung geschlitzt ausgebildeten, Statorring beinhaltet, auf dem die Teilelemente als Rotor montierbar sind, und wobei insbesondere der Statorring einen in etwa mittig umlaufenden, sich in Richtung des Rotors erstreckenden Wulst aufweist, der mit einer entsprechenden Gegenausnehmung des Rotors zusammen als Führung für den Rotor ausgebildet ist, insbesondere zur Durchführung des vorgenannten Verfahrens.

Für eine vereinfachte Montage eines vorerwähnten Reifen-Notlaufsystems soll der Montagetisch wenigstens zwei Auflageflächen für die jeweiligen Enden der einzelnen Teilelemente des Rotors aufweisen, die für die Montage des Rotors in den Freiraum zwischen die auseinander gezogenen Reifenwandungen der Luftbereifung verlagerbar sind.

Dabei können die Auflageflächen durch auswärts weisend ansteigende keilförmige, insbesondere aus besonders gleitfähigem Material wie PTFE (Polytetrafluorethylen) oder Polyethylen gebildete, Führungsflächen oder dergleichen bei Auswärtsbewegung automatisch anhebbar ausgebildet sein, so dass ein leichtere Handhabung möglich ist. Auch können die Teilelemente des Rotors mit Abstandshaltern versehen sein, so dass ihre untere Fläche nicht auf den Auflageflächen direkt aufliegt, sondern sich in einem gewissen Abstand darüber befindet, und damit ein Unterschieben eines Teilbereichs des Statorrings einfach möglich ist.

Erfindungsgemäß kann das zentrale Bedienelement eine drehbar gelagerte Scheibe umfassen, die mit vom mittleren Bereich nach außen verlaufenden und gekrümmt ausgebildeten Führungsschlitzen versehen ist, so dass durch Verdrehen der Scheibe die gegen Verdrehen gesicherten Auflageflächen einwärts oder auswärts verlagerbar sind, so dass in einfacher Weise eine entsprechende Verlagerung erfolgen kann.

Vorzugsweise können Kraftanlenkpunkte für Reifenöffnungshebel zum Auseinanderziehen der Reifenwandungen der Luftbereifung vorgesehen sein, die insbesondere an Standbeinen des Montagetisches angeordnet sind, wobei die Standbeine vorzugsweise auch als Auflagefläche für den Reifen vorgesehen sind, so dass mit einer einfachen technischen Konstruktion ein leichtes und unkompliziertes Auseinanderziehen der Reifenwandungen erfolgen kann.

Auch kann ein mit den Reifenöffnungshebeln zusammenwirkender manuell oder motorisch angetriebener Hydraulikzylinder vorgesehen sein, mittels dem die Reifenöffnungshebel zum Auseinanderziehen der Reifenwandungen der Luftbereifung insbesondere über an den Standbeinen vorgesehen Umlenkrollen und ein darüber zu den Reifenöffnungshebeln geführtes Zugelement mit Reifenöffnungshebel betätigbar sind, so dass zwischen der Krafteinleitung und der Kraftwirkung ein geometrischer Abstand liegen kann und somit eine einfachere Konstruktion und eine leichtere Betätigung möglich ist.

Insoweit kann auch zumindest ein mit dem Statorring zusammenwirkender, manuell oder motorisch angetriebener Hydraulikzylinder vorgesehen sein, mittels dem der Statorring aufweitbar und mit der Rotorinnenfläche in Kontakt bringbar ist.

Bei allen vorgenannten erfindungsgemäßen Ausführungen sowie den in der Figurenbeschreibung sowie den Ansprüchen genannten Ausgestaltungen kann als Alternative zu wenigstens einem Hydraulikzylinder auch zumindest ein Pneumatikzylinder oder ein mechanisches Verlagerungselement, wie z. B. eine manuell oder motorisch angetriebene Spindel oder dergleichen, vorgesehen sein.

Im Folgenden wird ein in der Zeichnung dargestelltes Ausführungsbeispiel der Erfindung erläutert. Es zeigen:
- Fig. 1: eine vereinfachte, seitliche Schnittdarstel- lung eines erfindungsgemäßen Montagetisches,
- Fig. 2 -5: ausschnittsweise Detailansichten des Gegenstandes nach Fig. 1.

In allen Figuren werden für gleiche bzw. gleichartige Bauteile übereinstimmende Bezugszeichen verwendet.

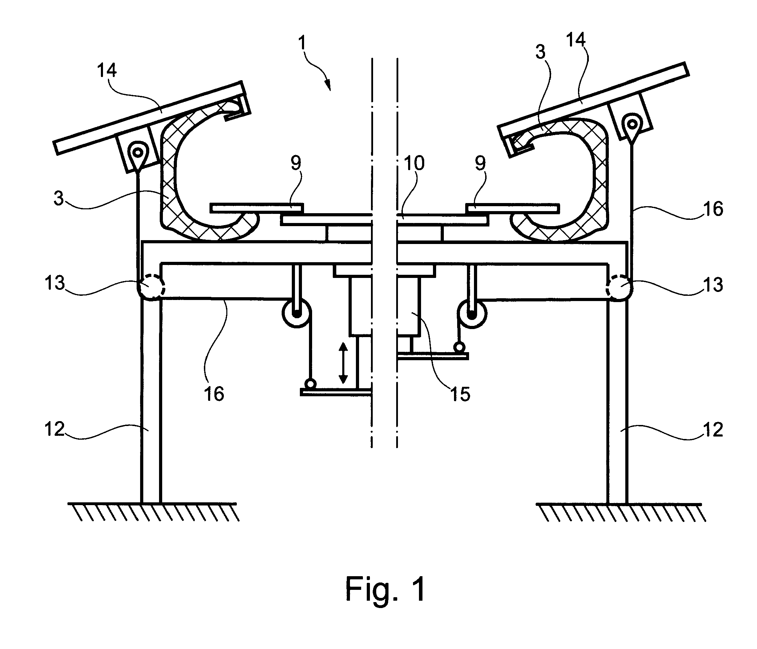

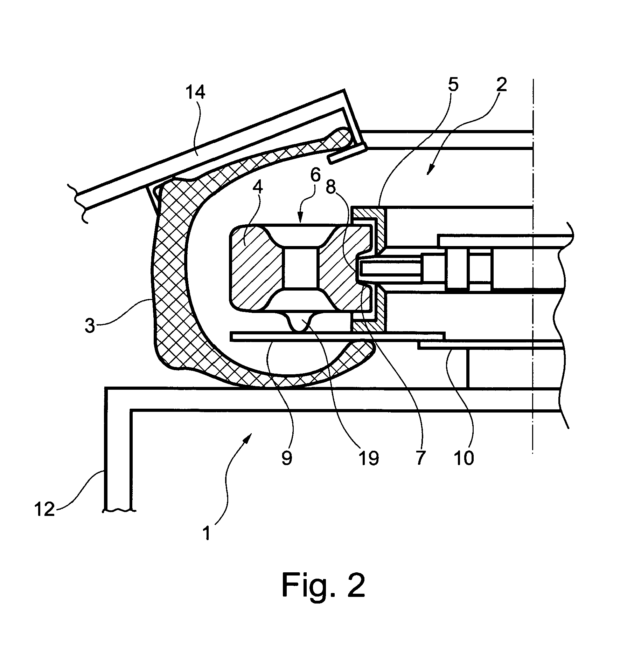

Die Figuren 1 und 2 zeigen einen Montagetisch 1 für ein Reifen-Notlaufsystem mit einem verspannbaren Notlaufeinsatz 2 für ein Kraftfahrzeugrad, das aus einer in der Zeichnung nicht dargestellten Felge und einer darauf angeordneten Luftbereifung 3 besteht.

Der Notlaufeinsatz 2 umfasst zum einen drei kreisringsegmentförmige, gelenkig miteinander verbundene und über ein Spannsystem miteinander verspannbare Teilelemente 4 und beinhaltet zum anderen auch einen auf der Innenseite der Felge anbringbaren, in Umfangsrichtung geschlitzt ausgebildeten Statorring 5, auf dem die Teilelemente als Rotor 6 montierbar sind.

Der Statorring 5 weist einen mittig umlaufenden, sich in Richtung des Rotors 6 erstreckenden Wulst 7 auf, der mit einer entsprechenden Gegenausnehmung 8 des Rotors 6 zusammen als Führung für den Rotor 6 ausgebildet ist.

Für eine vereinfachte Montage eines vorerwähnten Reifen-Notlaufeinsatzes 2 weist der Montagetisch 1 drei Auflageflächen 9 für die jeweiligen Enden der einzelnen Teilelemente 4 des Rotors 6 auf, die für die Montage des Rotors 6 in den Freiraum zwischen die auseinander gezogenen Reifenwandungen der Luftbereifung 3 durch Verschwenken verlagerbar sind.

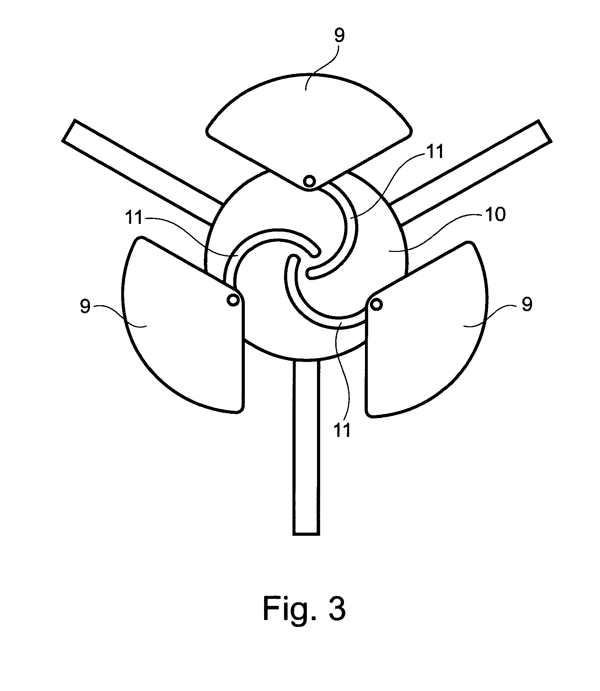

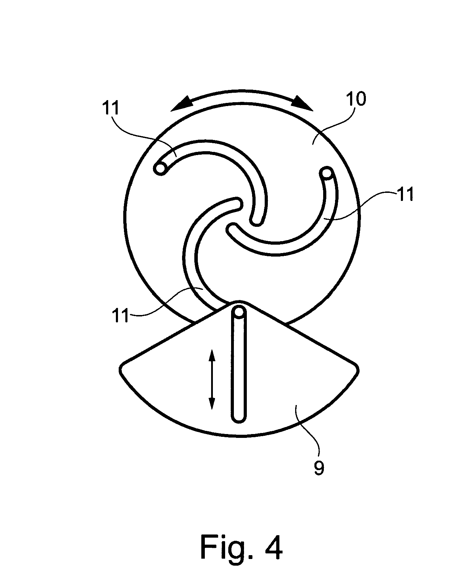

Dabei sind die Auflageflächen 9 durch in der Zeichnung nicht dargestellte auswärts weisend ansteigende keilförmige, insbesondere aus besonders gleitfähigem Material wie PTFE (Polytetrafluorethylen) oder Polyethylen gebildete, Führungsflächen bei Auswärtsbewegung automatisch anhebbar ausgebildet, und es ist eine drehbar gelagerte Scheibe 10 (vgl. Figuren 3 und 4) vorgesehen, die vom mittleren Bereich nach außen verlaufende und gekrümmt ausgebildete Führungsschlitze 11 aufweist, so dass durch Verdrehen der Scheibe 10 die gegen Verdrehen gesicherten Auflageflächen 9 einwärts oder auswärts verlagerbar sind. Dabei sind die Teilelemente 4 des Rotors 6 mit Abstandshaltern. 19 versehen, so dass ihre untere Fläche nicht auf den Auflageflächen 9 direkt aufliegt, sondern sich in einem gewissen Abstand darüber befindet, und damit ein Unterschieben eines Teilbereichs des Statorrings 5 einfach möglich ist. Der Montagetisch 1 umfasst als Auflagefläche für die Luftbereifung 3 vorgesehene Standbeine 12, an denen als Umlenkrollen ausgebildete Kraftanlenkpunkte 13 für Reifenöffnungshebel 14 zum Auseinanderziehen der Reifenwandungen der Luftbereifung 3 vorgesehen sind. Weiterhin ist ein mit den Reifenöffnungshebeln 14 zusammenwirkender motorisch angetriebener Hydraulikzylinder 15 vorgesehen, mittels dem die Reifenöffnungshebel 14 zum Auseinanderziehen der Reifenwandungen der Luftbereifung 3 über die an den Standbeinen vorgesehenen Umlenkrollen und ein darüber zu den Reifenöffnungshebeln 14 geführtes, als Stahlseil 16 Zugelement betätigbar sind. In Figur 1 ist auf der rechten Seite die Position der Reifenöffnungshebel 14 bei nicht aktiviertem Hydraulikzylinder 15 und auf der linken Seite bei aktiviertem Hydraulikzylinder 15 und somit auseinander gezogenen Reifenwandungen der Luftbereifung 3 dargestellt.

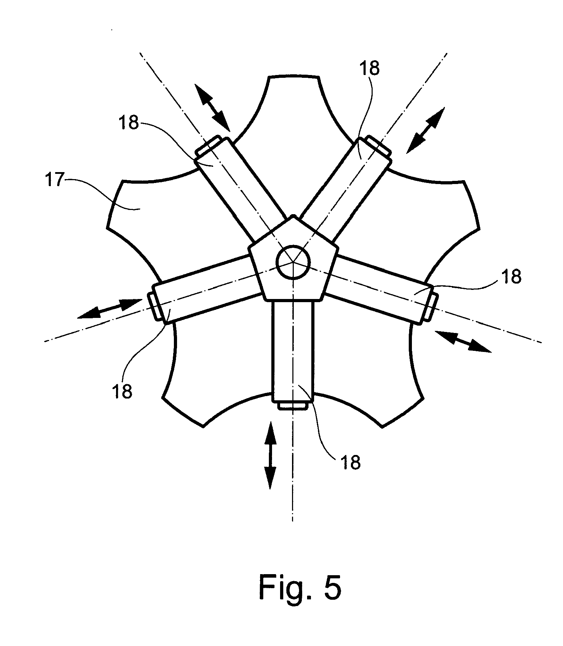

Wie aus den Figuren 2 und 5 ersichtlich, sind fünf an einer Befestigungsplatte 17 angebrachte und mit dem Statorring 5 zusammenwirkende, manuell oder motorisch angetriebener Hydraulikzylinder 18 vorgesehen, mittels denen der Statorring 5 aufweitbar und mit der Innenfläche des Rotors 6 in Kontakt bringbar ist. Dabei ist der untere Hydraulikzylinder 18 in seiner ausgefahrenen Position und die anderen Hydraulikzylinder 18 in ihrer eingefahrenen Position dargestellt.

## Patentansprüche

1. Verfahren zur Montage eines Reifen-Notlaufsystems mit einem verspannbaren Notlaufeinsatz (2) für ein aus Felge und darauf angeordneter Luftbereifung (3) bestehendes Kraftfahrzeugrad, wobei der Notlaufeinsatz (2) zum einen wenigstens zwei kreisringsegmentförmige, gelenkig miteinander verbundene und/oder über ein Spannsystem miteinander verspannbare Teilelemente (4) umfasst und zum anderen auch einen auf der der Luftbereifung (3) zugewandten Innenseite der Felge anbringbaren, insbesondere längs und/oder quer zur Umfangsrichtung geschlitzt ausgebildeten, Statorring (5) beinhaltet, auf dem die Teilelemente (4) als Rotor (6) montierbar sind, und wobei der Statorring (5) einen in etwa mittig umlaufenden, sich in Richtung des Rotors (6) erstreckenden Wulst (7) aufweist, der mit einer entsprechenden Gegenausnehmung (8) des Rotors (6) zusammen als Führung für den Rotor (6) ausgebildet ist, **dadurch gekennzeichnet, dass** die Reifenwandungen der Luftbereifung (3) auseinander gezogen werden, so dass sich zwischen ihnen ein Freiraum bildet, dann die Rotorsegmente in den Freiraum der Luftbereifung (3) eingebracht und miteinander verbunden werden, anschließend der zusammengedrückte Statorring (5) in das Innere des Rotors (6) gebracht und in den von dem Rotor (6) umschlossenen Innenraum gedrückt wird, dann der Statorring (5) auseinandergedrückt wird und die Luftbereifung (3) mit dem darin montierten Notlaufeinsatz (2) auf die Felge aufgeschoben wird.

2. Verfahren nach dem vorhergehenden Anspruch, **dadurch gekennzeichnet, dass** der Statorring (5) zumindest einen in etwa mittig umlaufenden, sich in Richtung des Rotors (6) erstreckenden Wulst aufweist und der Rotor (6) mit wenigstens einer entsprechenden Gegenausnehmung versehen ist und dass der Statorring (5) derart in den Rotor (6) eingesetzt wird, dass der Wulst des Statorrings (5) als Führung für den Rotor (6) fungiert.

3. Verfahren nach einem der vorhergehenden Ansprüche, **dadurch gekennzeichnet, dass** die Luftbereifung (3) auf einem Montagetisch (1) angeordnet wird.

4. Verfahren nach einem der vorhergehenden Ansprüche, **dadurch gekennzeichnet, dass** die Enden der Teilelemente (4) des Rotors (6) oder andere Teilbereiche der Teilelemente des Rotors (6), insbesondere in überlappender Weise, auf Auflageflächen (9) des Montagetisches (1) angeordnet und anschließend miteinander verbunden werden.

5. Verfahren nach einem der vorhergehenden Ansprüche, **dadurch gekennzeichnet, dass** der Statorring (5) beim Einbringen in das Innere des Rotors (6) mit einem Hilfselement einen gegenüber dem Innendurchmesser des Rotors (6) geringeren Außendurchmesser aufweist.

6. Verfahren nach einem der vorhergehenden Ansprüche, **dadurch gekennzeichnet, dass** der geringere Außendurchmesser des Statorrings (5) mittels Zusammendrücken des Statorrings (5) und Festlegung der zusammengedrückten Position mittels eines Hilfselements, insbesondere mittels eines Kabelbinders oder dergleichen, bewirkt wird.

7. Verfahren nach einem der vorhergehenden Ansprüche, **dadurch gekennzeichnet, dass** der geringere Außendurchmesser des Statorrings (5) durch eine zumindest leicht zusammengedrückte Vorfertigung des Statorrings (5) bewirkt wird und der Statorring (5) anschließend durch Auseinanderdrücken aufgeweitet wird.

8. Verfahren nach dem vorhergehenden Anspruch, **dadurch gekennzeichnet, dass** das Auseinanderdrücken des Statorrings (5) unter Zuhilfenahme einer insbesondere als verschiebbares Spreizwerkzeug ausgebildeten Drückvorrichtung, insbesondere einer hydraulischen Drückvorrichtung oder dergleichen, erfolgt.

9. Verfahren nach dem vorhergehenden Anspruch, **dadurch gekennzeichnet, dass** die Drückvorrichtung in den Wulst (7) des Statorrings (5) eingesetzt wird und insbesondere auch als Handhabungshilfe zum Aufschieben der Luftbereifung (3) mit dem darin montierten Notlaufeinsatz (2) auf die Felge dient.

10. Montagetisch (1) für ein Reifen-Notlaufsystem mit einem verspannbaren Notlaufeinsatz (2) für ein aus Felge und darauf angeordneter Luftbereifung (3) bestehendes Kraftfahrzeugrad, wobei der Notlaufeinsatz (2) zum einen wenigstens zwei kreisringsegmentförmige, gelenkig miteinander verbundene oder über ein Spannsystem miteinander verspannbare Teilelemente (4) umfasst und zum anderen auch einen auf der Innenseite der Felge anbringbaren, insbesondere längs und/oder quer zur Umfangsrichtung geschlitzt ausgebildeten, Statorring (5) beinhaltet, auf dem die Teilelemente (4) als Rotor (6) montierbar sind, und wobei insbesondere der Statorring (5) einen in etwa mittig umlaufenden, sich in Richtung des Rotors (6) erstreckenden Wulst (7) aufweist, der mit einer entsprechenden Gegenausnehmung (8) des Rotors (6) zusammen als Führung für den Rotor (6) ausgebildet ist, insbesondere zur Durchführung des Verfahrens nach einem der vorhergehenden Ansprüche, **dadurch gekennzeichnet, dass** der Montagetisch (1) wenigstens zwei Auflageflächen (9) für die jeweiligen Enden der einzelnen Teilelemente (4) des Rotors (6) aufweist, die für die Montage des Rotors (6) in den Freiraum zwischen die auseinander gezogenen Reifenwandungen der Luftbereifung (3) verlagerbar sind.

11. Montagetisch (1) nach dem vorhergehenden Anspruch, **dadurch gekennzeichnet, dass** die Auflageflächen (9) durch auswärts weisend ansteigende keilförmige, insbesondere aus besonders gleitfähigem Material wie PTFE (Polytetrafluorethylen) oder Polyethylen gebildete, Führungsflächen oder dergleichen bei Auswärtsbewegung automatisch anhebbar ausgebildet sind.

12. Montagetisch (1) nach dem vorhergehenden Anspruch, **dadurch gekennzeichnet, dass** das zentrale Bedienelement eine drehbar gelagerte Scheibe (10) umfasst, die mit vom mittleren Bereich nach außen verlaufenden und gekrümmt ausgebildeten Führungsschlitzen (11) versehen ist, so dass durch Verdrehen der Scheibe (10) die gegen Verdrehen gesicherten Auflageflächen (9) einwärts oder auswärts verlagerbar sind.

13. Montagetisch (1) nach einem der Ansprüche 10 bis 12, **dadurch gekennzeichnet, dass** Kraftanlenkpunkte (13) für Reifenöffnungshebel (14) zum Auseinanderziehen der Reifenwandungen der Luftbereifung (3) vorgesehen sind, die insbesondere an Standbeinen (12) des Montagetisches (1) angeordnet sind, wobei die Standbeine (12) vorzugsweise auch als Auflagefläche (9) für den Reifen vorgesehen sind.

14. Montagetisch (1) nach Anspruch 13, **dadurch gekennzeichnet, dass** ein mit den Reifenöffnungshebeln (14) zusammenwirkender manuell oder motorisch angetriebener Hydraulikzylinder (15) oder dergleichen vorgesehen ist, mittels dem die Reifenöffnungshebel (14) zum Auseinanderziehen der Reifenwandungen der Luftbereifung (3) insbesondere über an den Standbeinen (12) vorgesehen Umlenkrollen und ein darüber zu den Reifenöffnungshebeln (14) geführtes Zugelement mit Reifenöffnungshebel (14) betätigbar sind.

15. Montagetisch (1) nach einem der Ansprüche 10 bis 14, **dadurch gekennzeichnet, dass** zumindest ein mit dem Statorring (5) zusammenwirkender, manuell oder motorisch angetriebener Hydraulikzylinder (18) oder dergleichen vorgesehen ist, mittels dem der Statorring (5) aufweitbar und mit der Rotorinnenfläche in Kontakt bringbar ist.

## Geänderte Patentansprüche

### Geänderte Patentansprüche gemäss Regel 137(2) EPÜ.

**1.** Verfahren zur Montage eines Reifen-Notlaufsystems mit einem verspannbaren Notlaufeinsatz (2) für ein aus Felge und darauf angeordneter Luftbereifung (3) bestehendes Kraftfahrzeugrad, wobei der Notlaufeinsatz (2) zum einen wenigstens zwei kreisringsegmentförmige, gelenkig miteinander verbundene und/oder über ein Spannsystem miteinander verspannbare Teilelemente (4) umfasst und zum anderen auch einen auf der der Luftbereifung (3) zugewandten Innenseite der Felge anbringbaren, insbesondere längs und/oder quer zur Umfangsrichtung geschlitzt ausgebildeten, Statorring (5) beinhaltet, auf dem die Teilelemente (4) als Rotor (6) montierbar sind, und wobei der Statorring (5) einen in etwa mittig umlaufenden, sich in Richtung des Rotors (6) erstreckenden Wulst (7) aufweist, der mit einer entsprechenden Gegenausnehmung (8) des Rotors (6) zusammen als Führung für den Rotor (6) ausgebildet ist, **dadurch gekennzeichnet, dass** die Reifenwandungen der Luftbereifung (3) auseinander gezogen werden, so dass sich zwischen ihnen ein Freiraum bildet, dann die Rotorsegmente in den Freiraum der Luftbereifung (3) eingebracht und miteinander verbunden werden, anschließend der zusammengedrückte Statorring (5) in das Innere des Rotors (6) gebracht und in den von dem Rotor (6) umschlossenen Innenraum gedrückt wird, dann der Statorring (5) auseinandergedrückt wird und die Luftbereifung (3) mit dem darin montierten Notlaufeinsatz (2) auf die Felge aufgeschoben wird.

**2.** Verfahren nach dem vorhergehenden Anspruch, **dadurch gekennzeichnet, dass** der Statorring (5) zumindest einen in etwa mittig umlaufenden, sich in Richtung des Rotors (6) erstreckenden Wulst aufweist und der Rotor (6) mit wenigstens einer entsprechenden Gegenausnehmung versehen ist und dass der Statorring (5) derart in den Rotor (6) eingesetzt wird, dass der Wulst des Statorrings (5) als Führung für den Rotor (6) fungiert.

**3.** Verfahren nach einem der vorhergehenden Ansprüche, **dadurch gekennzeichnet, dass** die Luftbereifung (3) auf einem Montagetisch (1) angeordnet wird.

**4.** Verfahren nach einem der vorhergehenden Ansprüche, **dadurch gekennzeichnet, dass** die Enden der Teilelemente (4) des Rotors (6) oder andere Teilbereiche der Teilelemente des Rotors (6), insbesondere in überlappender Weise, auf Auflageflächen (9) des Montagetisches (1) angeordnet und anschließend miteinander verbunden werden.

**5.** Verfahren nach einem der vorhergehenden Ansprüche, **dadurch gekennzeichnet, dass** der Statorring (5) beim Einbringen in das Innere des Rotors (6) mit einem Hilfselement einen gegenüber dem Innendurchmesser des Rotors (6) geringeren Außendurchmesser aufweist.

**6.** Verfahren nach einem der vorhergehenden Ansprüche, **dadurch gekennzeichnet, dass** der geringere Außendurchmesser des Statorrings (5) mittels Zusammendrücken des Statorrings (5) und Festlegung der zusammengedrückten Position mittels eines Hilfselements, insbesondere mittels eines Kabelbinders oder dergleichen, bewirkt wird.

**7.** Verfahren nach einem der vorhergehenden Ansprüche, **dadurch gekennzeichnet, dass** der geringere Außendurchmesser des Statorrings (5) durch eine zumindest leicht zusammengedrückte Vorfertigung des Statorrings (5) bewirkt wird und der Statorring (5) anschließend durch Auseinanderdrücken aufgeweitet wird.

**8.** Verfahren nach dem vorhergehenden Anspruch, **dadurch gekennzeichnet, dass** das Auseinanderdrücken des Statorrings (5) unter Zuhilfenahme einer insbesondere als verschiebbares Spreizwerkzeug ausgebildeten Drückvorrichtung, insbesondere einer hydraulischen Drückvorrichtung oder dergleichen, erfolgt.

**9.** Verfahren nach dem vorhergehenden Anspruch, **dadurch gekennzeichnet, dass** die Drückvorrichtung in den Wulst (7) des Statorrings (5) eingesetzt wird und insbesondere auch als Handhabungshilfe zum Aufschieben der Luftbereifung (3) mit dem darin montierten Notlaufeinsatz (2) auf die Felge dient.

**10.** Verfahren nach einem der vorhergehenden Ansprüche, **dadurch gekennzeichnet, dass** das Verfahren mittels eines Montagetisches (1) durchgeführt wird, wobei der Montagetisch (1) wenigstens zwei Auflageflächen (9) für die jeweiligen Enden der einzelnen Teilelemente (4) des Rotors (6) aufweist, die für die Montage des Rotors (6) in den Freiraum zwischen die auseinander gezogenen Reifenwandungen der Luftbereifung (3) verlagerbar sind.

**11.** Verfahren nach dem vorhergehenden Anspruch, **dadurch gekennzeichnet, dass** die Auflageflächen (9) durch auswärts weisend ansteigende keilförmige, insbesondere aus besonders gleitfähigem Material wie PTFE (Polytetrafluorethylen) oder Polyethylen gebildete, Führungsflächen oder dergleichen bei Auswärtsbewegung automatisch anhebbar ausgebildet sind.

**12.** Verfahren nach dem vorhergehenden Anspruch, **dadurch gekennzeichnet, dass** das zentrale Bedienelement eine drehbar gelagerte Scheibe (10) umfasst, die mit vom mittleren Bereich nach außen verlaufenden und gekrümmt ausgebildeten Führungsschlitzen (11) versehen ist, so dass durch Verdrehen der Scheibe (10) die gegen Verdrehen gesicherten Auflageflächen (9) einwärts oder auswärts verlagerbar sind.

**13.** Verfahren nach einem der Ansprüche 10 bis 12, **dadurch gekennzeichnet, dass** Kraftanlenkpunkte (13) für Reifenöffnungshebel (14) zum Auseinanderziehen der Reifenwandungen der Luftbereifung (3) vorgesehen sind, die insbesondere an Standbeinen (12) des Montagetisches (1) angeordnet sind, wobei die Standbeine (12) vorzugsweise auch als Auflagefläche (9) für den Reifen vorgesehen sind.

**14.** Verfahren nach Anspruch 13, **dadurch gekennzeichnet, dass** ein mit den Reifenöffnungshebeln (14) zusammenwirkender manuell oder motorisch angetriebener Hydraulikzylinder (15) oder dergleichen vorgesehen ist, mittels dem die Reifenöffnungshebel (14) zum Auseinanderziehen der Reifenwandungen der Luftbereifung (3) insbesondere über an den Standbeinen (12) vorgesehen Umlenkrollen und ein darüber zu den Reifenöffnungshebeln (14) geführtes Zugelement mit Reifenöffnungshebel (14) betätigbar sind.

**15.** Verfahren nach einem der Ansprüche 10 bis 14, **dadurch gekennzeichnet, dass** zumindest ein mit dem Statorring (5) zusammenwirkender, manuell oder motorisch angetriebener Hydraulikzylinder (18) oder dergleichen vorgesehen ist, mittels dem der Statorring (5) aufweitbar und mit der Rotorinnenfläche in Kontakt bringbar ist.
